# EUROPEAN PATENT APPLICATION

(11) **EP 4 489 508 A1**
(43) Date of publication of application: **08.01.2025**
(21) Application number: 24185670.7
(22) Date of filing: 01.07.2024
(51) Int. Cl.: H04W 76/15, B60R 16/02, H04B 7/04, H04B 7/185, H04W 84/00

(54) **WIRELSS COMMUNICATION SYSTEM FOR GROUND-BASED MOVING VEHICLES**

(30) Priority: 05.07.2023 SE 2350854
(71) Applicant: ICOMERA AB, 411 03 Göteborg (SE)
(72) Inventor: KARLSSON, Mats, 411 03 Göteborg (SE)
(74) Representative: Lind Edlund Kenamets Intellectual Property AB

(57) **Abstract**

The present disclosure relates to a wireless communication system for use aboard a moving vehicle (10) and a method for communicating between a moving vehicle (10) and a stationary remote server (30). The wireless communication system comprising a router (100) in the moving vehicle (10) communicating with at a remote server (30) through an external network (2) comprising base stations (20a, 20b). The system further comprising at least one front antenna (11a) and at least one aft antenna (11b) wherein the router (100) is arranged to establish a connection with the remote server (30) over a front and aft communication link (121a, 121b) via the at least one front and aft antenna (11a, 11b) respective base stations, and wherein the router (100) is configured for receiving/transmitting wireless data to/from an aggregation server (31), using aggregated communication over at least the front and aft communication link (121a, 121b).

## Description

### TECHNICAL FIELD OF THE INVENTION

The present invention relates to the field of wireless communication technology, and more specifically to a wireless communication system and method for communicating wirelessly, particularly suitable for ground-based moving vehicles such as a train or metro.

### BACKGROUND

There is currently a high demand from passengers on moving vehicles, such as cars, busses, boats or trains, to be able to communicate through different user devices (such as smartphones, tablets and laptops) when travelling. In most homes and businesses, and even in public spaces such as in train stations and on the street, high-speed and affordable wireless data communication is enabled via the widespread availability of Wi-Fi and/or mobile data networks (GSM, 3G, LTE, 5G). Accordingly, most people expect the same types of high quality wireless data communication to be readily availible at all times, even when travelling on vehicles which are moving rapidly, through rural areas, through tunnels and/or through mountainous environments which are all examples of environments in which it is difficult to provide reliable and high-capacity wireless communication.

Furthermore, nowadays many passengers in a vehicle would have smartphones, featuring e.g. continuously operating applications, and many smartphones onboard the vehicle are active simultaneously, meaning that many handovers between passengers devices and the base stations are required when the vehicle moves, generating a large amount of signaling. Even though this problem is common for all moving vehicles, it is especially pronounced for ground-based vehicles moving at high speed, such as trains.

EP1175757 and EP2943011 by the same applicant describe two methods whereby many of these weaknesses resulting from wireless communication may be overcome through the concurrent use of multiple wireless links. Optimizations can hereby be based on e.g. latency, bandwidth, and other performance parameters, but also on e.g. cost.

However, the aforementioned solutions are at times insufficient to obtain an optimal transmission performance and the transmission capacity required to meet the communication demands of multiple simultaneous passengers. Especially when the moving vehicle travels through the above mentioned environments in which it is difficult to provide reliable and high-capacity communication.

There is therefore a need for an improved wireless communication system for moving vehicles, which provides improved capacity and reliability in all environments.

### SUMMARY OF THE INVENTION

Thus, in view of the above, there is a need for an improved wireless communication system for moving ground vehicles which provides better capacity, improved reliability while still being cost effective.

According to a first aspect of the invention there is provided a wireless communication system for use aboard a moving vehicle wherein the wireless communication system comprises at least one router arranged in the moving vehicle for communication with at least one stationary remote server through at least one external network comprising a plurality of base stations. The wireless communication system comprises at least one front antenna connected to the router, the at least one front antenna being provided on a front portion of the moving vehicle and at least one aft antenna connected to the router, the at least one aft antenna being provided on an aft portion of the moving vehicle. The router is arranged to establish a connection with the remote server over a front communication link via the at least one front antenna and a first base station of said external network and the router is arranged to establish a connection with the remote server over an aft communication link via the at least one aft antenna and a second base station, different from the first base station, of said external network. The at least one remote server at least comprises an aggregation server, and the router is configured for receiving and transmitting wireless data to and from said aggregation server, using aggregated communication over a plurality of separate communication links, the communication thereby at the end points appearing as a single link, and wherein said plurality of communication links comprises the front and aft communication link. The aggregation server may in turn be connected to other remote servers, and may forward communication to such remote servers, or may receive communication from such remote severs.

The antennas may be directly connected to the router. However, preferably the connection between the antennas and the router is indirect. For example, a radio unit, also referred to as a trackside unit, may be arranged between the router and the antennas, and preferably arranged relatively close to the antennas. Additionally, or alternatively, one or more switches may be arranged between the router and the antennas.

By "antenna" is, in the context of the present application, to be understood one ore more antennas arranged for simultaneous communication on the same link or channel. In an embodiment, each antenna may be a single antenna, but in other embodiments each antenna may be a group of antennas, such as an antenna array or a group of distributed antennas, e.g. useable for MIMO communication. In other embodiments, one or more antenna may be single antenna(s), and one or more antenna may be antenna array(s) or antenna group(s).

The "router" is a networking router, which is a machine that forwards data packets between networks, on at least one data link in each direction. The router may be a mobile access router, and preferably a mobile access and applications router.

By front and aft is here meant a relative disposition, with the front antenna being closer to the front of the train than the aft antenna, and the front portion of the train being a portion closer to the front than the aft portion. Preferably, the front antenna and aft antenna are arranged at or in the vicinity of a front end and aft end, respectively, of a carriage, such as at or in the vicinity of a fore end and aft end of one and the same carriage. However, more preferably, the front antenna and aft antenna are arranged on separate carriages, and preferably also separated by one or more intermediate carriages. Preferably, the front antenna and aft antenna are arranged at or in the vicinity of the front and aft ends, respectively, of the entire train set.

The remote server comprises an aggregation server, or aggregation gateway, but may in addition also comprise further remote servers connected to the aggregation server/gateway. The remote server(s) may be any server or site accessible through an exterior mobile network, such as a DNS server, an ISP infrastructure gateway, a content provider server of interest to the passengers of the moving vehicle, or the like. For all common applications of this invention, the remote server(s) will provide access to the Internet, but partly or purely private network applications are also feasible.

Aggregation means that multiple wireless links are aggregated for simultaneous use by means of routing traffic on said links through a shared virtual connection to and from the aggregation gateway/server, which is a stationary computer acting as a server - an aggregation server - on the Internet or in a private network, This method, hereinafter referred to as "aggregation", greatly improves the reliability of high-bandwidth wireless communication for moving vehicles.

The present invention is based on the realization that much more efficient communication via an external network can be accomplished by using two communication links, a front communication link and aft communication link, which are spatially separated due to the utilization of a front and aft antenna of the moving vehicle where the front and aft antenna are communicating with different base stations. This can be used to distribute different data streams on different, spatially separated, links to increase capacity and performance of the communication. By using aggregated communication, where a data stream is divided into sub-streams, which are forwarded on different links, and then recombined in an aggregation server the overall capacity and performance is increased, and the reliability is greatly improved. Due to the spatial separation, the same frequencies may also be used at both front and aft directions for forming separate channels.

The concurrently useable multiple links provided by the present invention provides enhanced bandwidth and communication capacity. It also provides redundancy and improved coverage. For example, the fore antenna may have good coverage at times when the aft antenna does not, and vice versa. This also improves the overall reliability of the system.

With the present invention, data throughput rates to trains of 1-100 Gbit/s, or even higher, can be obtained.

The wireless communication is especially well suited for use aboard moving trains or subway (metro) trains which comprise a plurality of interconnected carriages. Trains with a plurality of carriages can be very long, allowing the front and aft antenna to be placed with a greater spatial separation, compared to e.g. a buss, which mitigates the risk of any overhearing or interference between the front and aft communication link. In some implementations, the front antenna and aft antenna are provided on a front and aft train carriage respectively, the front and aft carriage being separated by at least one carriage, and preferably at least two carriages and most preferably at least three carriages.

Preferably, the aft and fore antennas are separated by at least 25 m, and preferably by at least 50 m, and more preferably at least 100 m, and most preferably at least 200 m.

However, it is understood that the communication system of the present invention can work, and enhance data throughput, even in situations when only one base station is availible and/or situations in which there is some overhearing/interference between the front and aft communication links. For instance, in a situation in which only one base station is availible the front and aft communication link may cooperate and act as a single communication link to increase the radiated/received power to/from the single available base station which increases the signal-to-noise ratio and allows the data throughput to be increased (e.g. by using modulation schemes with higher spectral efficiency).

In some implementations, the frequency band of the front and aft communication link are overlapping. That is, the front and aft communication link may utilize partially or fully the same frequency band, i.e. the same link or channel, without overhearing due to the two communication links being physically separated from each other. In some implementations, the frequency band used by one or both of the front and aft communication link is an Unlicensed National Information Infrastructure (UNII) frequency band, preferably in the UNII-1 (5.150 GHz to 5.250 GHz) or UNII-3 (5.725 GHz to 5.850 GHz) frequency band. Other UNII frequency bands may also be used, in addition or as alternatives to these, such as UNII-5 (5.925-6.425 GHz) and UNII-7 (6.525-6.875 GHz). Each UNII frequency band can be divided and used for two or more channels, such as channels having a bandwidth of 40 MHz, 80 MHz, 160 MHz, 320 MHz, or higher depending on the frequency and technology used or a combination of channels having different bandwidths. The UNII-5, with a bandwidth of 500 MHz, and UNII-7, with a bandwidth of 350 MHz are particularly well suited for providing several separate channels. However, it is understood that usage of the UNII bands is merely exemplary, and that usage of other frequency bands is possible. For example, the unlicensed frequency band around 60 GHz could be used.

In some implementations, the front and aft communication links are of a first frequency band and the system further comprises a second front and aft antenna configured to communicate with the first and second base station respectively over a second frequency band, forming a second front and aft communication link, the second frequency band being different from the first frequency band and the plurality of communication links further comprising the second front and aft communication links. Thus, in case two fore antennas are used, one may operate at one frequency band, such as UNII-1, and the other on another frequency band, such as UNII-3, and the same may apply when two aft antennas are used. Hereby, four concurrently useable links may be provided. The links may also be formed by different channels within one or more of the UNII frequency ranges.

Preferably, the antennas at both the front end and the aft end are arranged to communicate with base stations ahead of and behind the train, respectively, over at least 3 channels/links.

By the use of the same channel(s)/link(s) for both the aft and front antenna, the effectively used number of links/channels is doubled compared to the actual number of available channel(s)/link(s). For example, if a single channel, channel 1, is provided by two adjacent base stations, a train travelling between the two base stations may communicate separately and independently over channel 1 with the base stations ahead of the train with the front antenna, and with the base station behind the train with the aft antenna. Thus, in practice two separate links/channels are provided. Similarly, if two channels, channels 1 and 2, are provided by the two adjacent base stations, a train travelling between the two base stations may communicate separately and independently over both channel 1 and 2 with the base stations ahead of the train with the front antenna, and over both the same channels with the base station behind the train with the aft antenna. Thus, in practice four separate links/channels are obtained. Similarly, providing 3 links/channels from each base station will provide the possibility of communicating with the train over 6 independent links/channels - 3 at the front end and 3 at the aft end. Similarly, the concept may be extended to more than 3 channels/links from each base station.

The throughput provided by the channels/links provided the fore and aft end will be dependent on the distance to the base stations ahead of and behind the train, and generally the highest overall throughput will be obtained when the train is essentially between the two base stations. As the train passes a base station, it may temporarily loose contact with that base station, and a handover for the front end communication will be made to the next base station ahead of the train. Having passed the base station completely, a new handover will be made for the aft end communication, handing over from the base station behind to the one that has just been passed.

The links provided for the aft and fore antennas may be provided by dedicated trackside or wayside base stations, e.g. arranged in GSM-R masts or other existing wayside infrastructure, or on dedicated masts/poles. The base stations may in this case be arranged as a private network.

Additionally, or alternatively, the links provided for the fore and aft antennas may be provided by conventional base stations in existing cellular networks. The links provided for the aft and fore antennas may in this case be provided by the same cellular network operator. However, the links may also be provided through two or more different cellular network operators.

Accordingly, additional communication links without overhearing may be added which further enhances the bandwidth and latency of the communication system.

That is, at least four communication links may be defined by the communication system, two front communication links and two aft communication links. It is envisaged that each of the at least four communication links may be used by the router for sending and receiving data or that e.g. one of the front communication links is wholly used for transmitting data from the router and the other front communication link is wholly used for receiving data from the remote server and vice versa for the aft communication links. It is further understood that the placement of the second front and aft antenna may be the same as the placement of the first front and aft antenna, e.g. the second aft antenna may be placed on the same carriage as the first aft antenna and the second front antenna may be placed on the same carriage as the first front antenna.

For instance, the first and second front antenna may be arranged on a front carriage set and the first and second aft antenna may be arranged on an aft carriage set. The front and aft carriage set each comprising at least one carriage wherein the front and aft carriage set are separated by at least one intermediate carriage.

In some implementations, at least one of the front antenna and aft antenna is a directional antenna. In a preferred embodiment, all front and aft antennas are directional antennas. Thu the front and aft communication link may be established without overhearing even if the front and aft antenna are placed closely together, e.g. on the same train carriage. Using the directionality of the directional antennas the front and aft antenna may be directed towards the first and second base station respectively which minimizes and/or eliminates overhearing.

The communication system may further comprise an antenna steering unit configured to steer an antenna beam of said at least one directional antenna. For instance, the at least one directional antenna is at least one of an electronically steered phased array antenna (such as an electronically steered patch array antenna) and a mechanically steered antenna (such as a steerable parabolic dish antenna) wherein the antenna steering unit is configured to electronically or mechanically steer said antenna beam. Accordingly, the antenna steering unit may steer the antenna beam of the front and/or aft antenna so as to target the first and second base station even when the train is moving.

It is envisaged that the antenna steering unit may be configured to steer and/or adjust the antenna beams based on the direction of travel of the moving vehicle and e.g. in response to the moving vehicle turning. For instance, the moving vehicle may be a train and the antenna steering unit may be configured to receive data from the train navigation system and/or GPS data whereby the antenna beams are steered accordingly to be directed towards the first and second base station respectively.

The antennas on the base stations may also be directional antennas, and in particular when trackside/wayside base stations are used. In a preferred embodiment, the antennas of the base stations are directed in a direction generally coinciding with the railway. Further, the antennas are preferably directed downwardly, and arranged to reach the ground at a position ahead of the next base station. Hereby, radio contact between the base stations may be avoided, which facilitates reuse of the radio channels/links between the base stations. Hereby, use of the same links/channels both at the front antenna(s) and the aft antenna(s) is further facilitated.

The router may be configured for receiving and transmitting wireless data to and from both said aggregation server, using aggregated communication over said front and aft communication links, and at least one other stationary communication server, using non-aggregated communication over a single link, and the router further being accessible by a plurality of client devices onboard said moving vehicle.

However, routing all traffic from a moving vehicle to an aggregation server may put a strain on the aggregation server, and in order to reduce this, at least some of the communication may be sent to other servers without aggregation. This maintains all the benefits and advantages of the aggregated communication, but in addition solves the bottleneck problem. Thus, great advantages in respect of enhanced bandwidth and other communication properties, lowered costs, and increased robustness may be provided.

Further, the system may comprise a controller within or connected to said router, said controller including at least one selection rule for selecting whether to use aggregated or non-aggregated communication, the controller being configured to determine, upon a request from a client device to communicate with one of said remote servers, whether one of said at least one rules applies, and to select using aggregated communication via said aggregation server or non-aggregated communication via said at least one other communication server for communication based on said determination. The rule(s) may e.g. comprise a rule to use aggregated communication for VPN and/or VoIP data, and/or to use non-aggregated communication for video data.

Thus, it is possible to select which network traffic that is to be aggregated in the process of routing said traffic between the moving vehicle and the remote server. It is determined, upon a request from a client device to access a resource on a remote server, whether that request should use aggregation. When aggregation should be used, routing of the request occurs through a specific stationary server - the aggregation server - whereas where aggregation should not be used, an "ordinary" wireless link is selected. Hereby, such non-aggregated traffic link selected for this purpose. The "ordinary" communication link may e.g. be at least one of the auxiliary communication link described in the below, the second aft communication link and the second front communication link. Additionally, it is envisaged that the "ordinary" communication link may be defined as a portion (e.g. by using time-division multiplexing or frequency-division multiplexing) of the front and aft communication link.

This is based on the realization that most data streams are very short, whereas some data streams, such as voice over IP (VoIP) streams are long. Aggregation provides great advantages in respect of maintaining streams over a long period of time. The need for aggregation and ensuring that the streams are maintained are of great importance for such long streams, whereas this is of less need for shorter streams. For example, downloading an ordinary web page is typically made by downloading a plurality of separate streams. Should one of these streams fail, re-sending of that stream would be easily handled. However, should a VoIP stream be disrupted, the call would be aborted. Thus, by using aggregation for only certain streams, the overall performance of the communication system is greatly improved. Further, by using the aggregated communication only for certain streams, being in best need of this performance, the capacity of this communication link is better used, and saved for the streams where it is of the best advantage.

Accordingly, in some implementations, the router is arranged to automatically distribute the communication traffic between available communication links, both the front and aft communication links, based on specific optimization conditions, such as price, latency and/or speed. In particular, the distribution between available links can be made in response to determined roundtrip times for sent-out messages requiring an automated response, such as a ping (ECHO-REQUEST) or a DNS query, in the same way as per se discussed in EP 2943011, said document hereby being incorporated in its entirety by reference.

In some implementations, the router is further connected to an internal network on-board the moving vehicle, for connection to on-board client devices, and preferably a wireless internal network, and most preferably a wireless internal network operated in accordance with an IEEE 802.11 standard, such as Wi-Fi. To this end, one or more internal access points may be provided inside the vehicle.

In some implementations, the system further comprises an auxiliary antenna provided on the moving vehicle, the auxiliary antenna being connected to the router, wherein the router is further arranged to establish a connection with the remote server over an auxiliary communication link via the auxiliary antenna and said external network, and wherein said plurality of communication links further comprises the auxiliary communication link. The auxiliary communication link may e.g. be defined between the auxiliary antenna and the first or second base station over a frequency band different from the front and aft communication link or between the auxiliary antenna and a third base station of the external network.

Thus, the front and aft communication link may be assisted by at least one auxiliary communication link to enable enhanced communication redundancy and bandwidth. In one exemplary implementation the front and communication link are UNII-1 or UNII-3 communication links whereby the auxiliary communication link is a 5G communication link. However, the auxiliary communication link may be of other types as well such as a Satellite-, GSM-, 3G- or LTE-communication link.

According to a second aspect of the invention there is provided a method for wireless communication between a moving vehicle, comprising a front and aft antenna provided on a front and aft portion of the moving vehicle respectively, and at least one stationary remote server through at least one external network comprising a plurality of base stations. The method comprises providing a front communication link between a router of the moving vehicle and the remote server via the front antenna and a first base station of the external network and providing an aft communication link between the and the remote server via the aft antenna and a second base station of the external network. The method further comprising communicating between said router and said at least one remote server being an aggregation server and wherein the router is configured for receiving and transmitting wireless data to and from said aggregation server, using aggregated communication over said front and aft communication links, the communication thereby at the end points appearing as a single link.

Any functions described in relation to a system may have corresponding features in a method and vice versa.

### BRIEF DESCRIPTION OF THE DRAWINGS

The present invention will be described in more detail with reference to the appended drawings, showing currently preferred embodiments of the invention.
Fig. 1 is a schematic illustration of a wireless communication system according to some implementations of the invention.
Fig. 2 is a block diagram illustrating a wireless communication system according to some implementations.
Fig. 3 illustrates different communication routes of the communication system according to some implementations, the communication routes being between client devices and the remote server.
Fig. 4 is a schematic illustration of a wireless communication system according to an embodiment of the invention.
Fig. 5 is a schematic illustration of the aggregated communication for the wireless communication system of Fig. 4 at various positions between two base stations.
Fig. 6 is a schematic illustration of a wireless communication system according to an embodiment of the invention.
Fig. 7 is a schematic illustration of a wireless communication system according to another embodiment of the invention.
Fig. 8 is a diagram illustrating the throughput for a wireless communication system over time as a train travel on a railway.

### DETAILED DESCRIPTION OF CURRENTLY PREFERRED EMBODIMENTS

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the following examples, an embodiment related to a rail vehicle, such as a train or subway vehicle, is disclosed. However, it is to be acknowledged by the skilled reader that the method and system are correspondingly useable on other moving vehicles, such as ferries or other types of ships and buses.

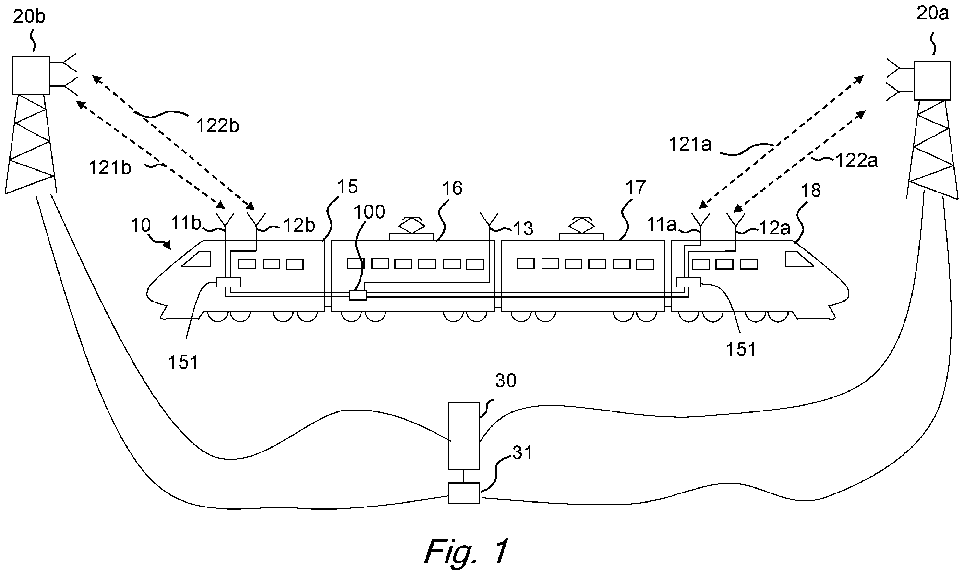

Fig. 1 is a schematic illustration of a wireless communication system according to some implementations. The communication system comprises a router 100, arranged in a train 10 wherein the router is configured to communicate with one or more external servers 30, the external server(s) comprising an aggregation server 31, via an external network comprising the base stations 20a, 20b and wired or wireless communication links to from the aggregation server 31 and the remote server(s).

Aggregation is the state and process whereby data streams between on-board clients and external server(s) 30 are jointly managed, preferably by a special protocol, between the router 100 and the aggregation gateway/aggregation server 31. In reality, aggregated traffic passes through ISP infrastructure servers on its way to and from the aggregation server 31, but the virtual connection makes it appear to a third party, such as a web site or remote server 30 communicating with the aggregation server 31, that all communications are taking place between that site and the aggregation server 31. This is advantageous because the aggregation server 31 has a single, stable IP address and because streams of data can be moved from one physical link to another with minimal disruption, since the various links can be monitored both from the router 100 and from the aggregation server 31.

The use of multiple parallel wireless links without aggregation, for non-aggregated communication, can be done by standards and common practices of IP networking. For example, a simple approach would be for the router 100 to continuously loop over its connected links, assigning each request from a client on board to the link least recently given such an assignment. This is known as "round robin" routing. The selected link would convey the client's request to the target server and convey any response from the target server 30 back to the router, which conveys said response back to the original client. From the point of view of the target server 30, it would appear to be communicating with the IP address of the selected link. The aggregation server 31 would have no part in this communication whatsoever. The next request from any client would be handled by a different link and would therefore use a different IP address.

For a deeper discussion of selective routing, "data streams" are hereinafter defined as all communication with a specific combination of ultimate source and ultimate destination IP addresses and network ports, or whatever the equivalent of this would be in a networking scheme where these identifiers are not used or not sufficiently distinguishing. Such a stream is created when any entity on one side of the system seeks to communicate with any entity on the other side, using any specific combination of ports. A stream is deemed terminated after a period of inactivity which need not be closely defined, but will typically correspond to the session-ending 15-second timeout in the transmission control protocol (TCP). Renewed activity after termination, even if the source and destination are unchanged, constitutes a new stream for the purposes of this discussion.

In order to make a choice between aggregated and non-aggregated communication, each data stream can be analyzed and selected to be routed with aggregation or without aggregation based on the properties of each stream and on the availability of the aggregation server 31, in such a way as to optimize the load on the aggregation server's 31 resources while also enabling the router 100 to function in situations where the aggregation server 31 cannot or should not be used at all. To this end, the router 100 preferably has some information on the likely load on its aggregation server 31, either obtained directly, by communication with the aggregation server 31, or indirectly, by means of router configuration details which describe specific rules on what kind of streams to aggregate, what not to aggregate, or both.

When an aggregation server 31 is available, data streams will be selected for aggregation based primarily on the differing benefits of aggregating different types of traffic. The present invention is based on the realization that these needs for different types of traffic varies greatly, and by treating such traffic differently, great savings and much increased performance can be obtained. For example, an individual HTTP request made from a client browsing the web on board the train 10 is likely to be brief, and one client's HTTP-based interaction with one web site is likely, but not guaranteed, to be unaffected by changes in the client's apparent public address from one individual request to another. Furthermore, HTTP traffic constitutes a large portion of passenger traffic. Therefore, excluding all HTTP requests from aggregation saves a relatively large amount of aggregation server load, while generally costing little in perceived performance. At the other end of the spectrum, a VPN connection is likely to be lengthy and sensitive to perturbations, such as changes in apparent IP address due to periods of poor coverage on one link or another. VPN connection data streams would therefore be among the last types of streams to be excluded from aggregation. They can be said to have a high need for aggregation, by virtue of the relative benefits they derive from aggregation.

The automatic analysis of data streams, for the purpose of categorization by need for aggregation, can take place by a variety of means, as discussed below. The subsequent or simultaneous selection of categorized streams to be aggregated will take place by rules akin to or identical to firewall rules. This can be arranged into a system such that categorization is numeric and directly comparable to the overall capacity for aggregation, with the effect that the level of aggregation performed can be adjusted in real time based on the measured aggregation server 31 load and the volume of traffic at each level of need.

The router 100 in fig. 1 is arranged to communicate with at least one remote server 30 through at least one external network comprising at least two stationary base stations 20a, 20b. The router 100 is configured to establish a connection with the remote server 30 via the base stations 20a, 20b using at least two separate, simultaneously usable, communication links 121a, 122a, 121b, 122b. The at least two communication links 121a, 122a, 121b, 122b comprises a front communication link 121a and an aft communication link 121b and the router 100 is configured to perform aggregation of the data streams transmitted over the front and aft communication link 121a, 121b.

The front communication link 121a is established between a front antenna 11a and a first base station 20a of the external network and the aft communication link 121b is established between the aft antenna 11b and a second base station 20b.

The at least one remote server 30 comprises an aggregation server and the router 100 is configured for receiving and transmitting wireless data to and from said aggregation server, using aggregated communication over said at least two separate communication links, the communication thereby at the end points appearing as a single link. In some implementations, the router 100 is configured to additionally communicate with the at least one remote server 30 using at least one non-aggregated communication link.

The front antenna 11a is arranged on a front portion of the train 10 and the aft antenna 11b is arranged on an aft portion of the train 10. For example, the front antenna 11a is arranged on the front most carriage 18, and preferably in a front part thereof, such as at or in the vicinity of the front end, while the aft antenna is arranged on the aft most carriage 15, and preferably in an aft part thereof, such as at or in the vicinity of the aft end.

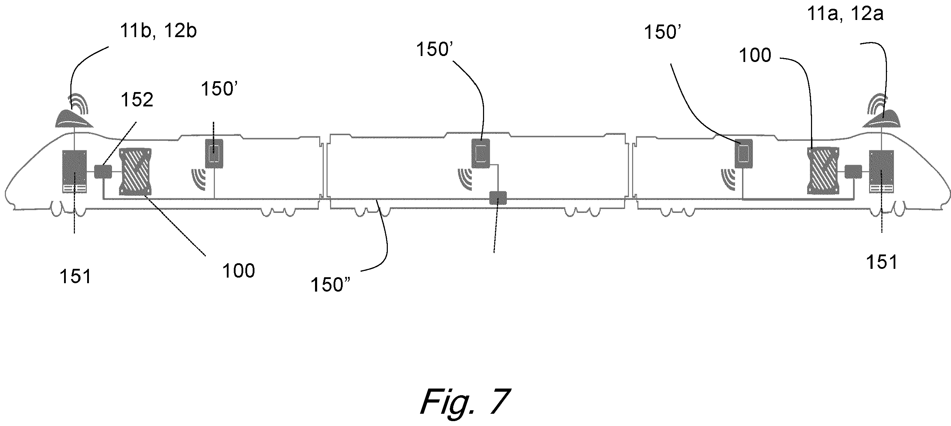

The antennas may be directly connected to the router 100. However, preferably the connection between the antennas 11a, 11b, 12a, 12b and the router 100 is indirect. For example, a radio unit 151, also referred to as a trackside unit, may be arranged between the router and the antennas, and preferably arranged relatively close to the antennas. Additionally, or alternatively, one or more switches (see Fig. 7) may be arranged between the router and the antennas.

In one embodiment, the front antenna 11a and aft antenna 1 1b are further separated by at least one intermediate carriage 16, 17. For example, the front and aft antenna 11a, 11b may be arranged on carriage 15 and 17 respectively or on carriage 16 and 18 respectively. It is understood that the train in fig. 1 is moving towards the right, making carriage 18 the front carriage, however, at other times the train 10 may be moving in the opposite direction making carriage 15 the front carriage.

In some implementations, the front and aft antennas 11a, 11b are separated by at least 50 meters, and preferably at least 100 meters, and most preferably at least 200 meters as measured along the train 10.

The physical separation between the front and aft antenna 11a, 11b enables the front and aft communication links 121a, 121b to be used for independently transmitting/receiving data from/to the router 100 without overhearing. This enables the front and aft communication links 121a, 121b to utilize at least partially overlapping (or fully overlapping and identical) frequency bands. For instance, the front and aft communication links 121a, 121b utilize the same Unlicensed National Information Infrastructure (UNII) band, such as the UNII-1 frequency band or UNII-3 frequency band.

In some implementations, the front and aft antenna 11a, 11b are directional antennas and directed towards a respective one of the first and second base station 20a, 20b. With the front and aft antenna 11a, 11b being directional antennas the physical separation between the front and aft communications links 121a, 121b can be established even with the front and aft antenna 11a, 11b placed more closely together. For instance, the front and aft antenna 11a, 11b may be placed on a same carriage 15, 16, 17, 18 wherein the front and aft antenna 11a, 11b are directional antennas. The directional antennas may e.g. be electronically steered antennas, such as electronically steered array antennas, or mechanically steered antennas, such as mechanically steered parabolic dish antennas.

In some implementations, the front and aft antennas 11a, 11b are accompanied by a second front antenna 12a and second aft antenna 12b respectively. For instance, the front antenna and second front antenna 11a, 12a may be provided on a same carriage 18 and the aft antenna and second aft antenna 11b, 12b may be provided on same carriage 15. For instance, the front antenna and second front antenna 11a, 12a forms a front communication link 121a and second front communication link 122a with the remote server 30 and the aft antenna 11b and second aft antenna 12b forms an aft communication link 121b and second aft communication link 122b with the remote server 30. Accordingly, in some implementations, the communication system comprises at least four communication links 121a, 122a, 121b, 122b, two aft communication links 121b, 122b between the two aft antennas 11b, 12b and the second base station 20b and two front communication links 11a, 12a between the two front antennas 11a, 12b and the first base station 20a.

The front antennas may be arranged closely together, e.g. on the same carriage, and if they are directive antennas also directed in substantially the same direction, e.g. towards the first base station 20a. To this end, the front communication links 121a, 122b utilize different frequency bands to avoid interference and overhearing. For example, one of the front antennas communicates with the first base station 20a using the UNII-1 frequency band while the other one of the front antennas communicates with the base station using the UNII-3 frequency band. The same applies analogously to the two aft antennas 11b, 12b.

To this end, the first and second base station 20a, 20b may each comprise two separate radio modules and/or two antennas to enable simultaneous communication with the two front antennas 11a, 12a using the front communication links 121a, 122a and the two aft antennas 11b, 12b using the aft communication links 121b, 122b.

The base stations 20a, 20b of the external network may communicate with each other, e.g. via cable or by highly directive (backhaul) antennas, while also communicating with the remote server 30. The network formed by the train 10, the multiple base stations 20a, 20b, and the remote server 30, forms a mesh network, where nodes non-hierarchically connect to many other nodes.

The communication system may further comprise an auxiliary antenna 13 connected to the router 100 to enable communication with the external network via an auxiliary communication link (not shown). For instance, the auxiliary communication link is established between the auxiliary antenna 13 and a third base station (not shown) of the external network. That is, the auxiliary communication link accompanies the front and aft communication links 121a, 121b providing the router 100 with an additional communication link through which data can be router to/from the remote server 30. For instance, the auxiliary communication link is a GSM, 3G, LTE, 5G or satellite communication link whereas the front and aft communication link(s) are UNII-1 or UNII-3 communication links. To this end, the auxiliary antenna 13 may be an omnidirectional antenna or a directional antenna (which is especially useful for satellite communications) which is placed on an arbitrary position along the train 10 such as on the same carriage as the front or aft antenna 11a, 11b, 12a, 12b or on a different carriage. In one preferred implementation, the auxiliary communication link is a 5G communication link.

Accordingly, the front and aft communication links 121a, 122a, 121b, 122b are backed up by an auxiliary communication link which enables e.g. enhanced data throughput and/or reduced latency.

It is understood that the communication system may also facilitate communication even in situations when only a same and single base station 20a, 20b is reachable by the front and aft antennas 11a, 11b, 12a, 12b. For instance, the at least two antennas (at least one front and one aft antenna) may cooperate to receive data transmitted from the single base station which enhances the reception performance and allows the bandwidth to be increased. Alternatively, if communication is enabled using two different frequency bands (e.g. in implementations with two front antennas 11a, 12a and two aft antennas 11b, 12b) two antennas of the moving vehicle (one front and one aft, two aft or two front) may transmit to the single reachable base station using a first frequency band whereas the remaining antennas receive data from the single reachable base station using a second frequency band.

It is further noted that while the present invention is suitable for trains it may also be implemented for metro vehicles/subway trains. For instance, base stations may be provided at approximately regular intervals (e.g. each 200 meters or each 300 meters) inside subway tunnels and, with the present invention with a front and aft communication link established to these tunnel base stations the bandwidth and latency of data communication for client devices on board the subway trains are enhanced.

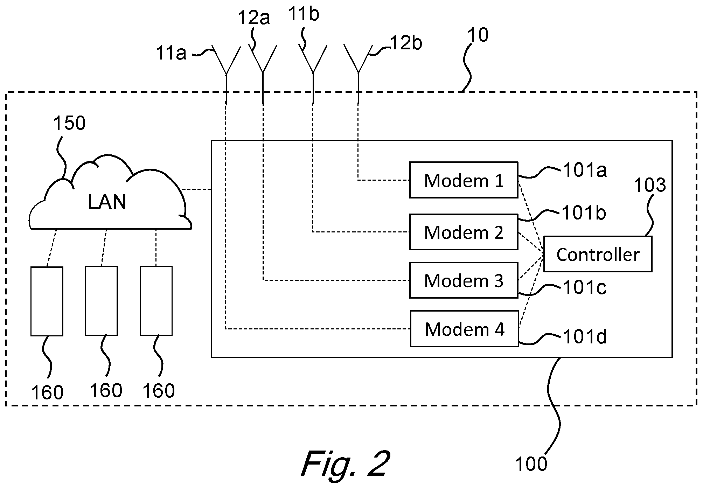

In Fig. 2 a schematic illustration of a train 10 having a communication system is provided. The communication system comprises a router 100 for receiving and transmitting data between an internal local area network (LAN) 150, and the first and second base station. Communication to and from the base stations is provided through the front and aft antennas 11a, 11b and the second front and aft antennas 12a, 12b provided on the train 10. Accordingly, two or more communications links are available between the train 10 and the base stations.

The LAN 150 is preferably a wireless network, using one or several internal antennas, or access points, to communicate with client(s)160 within the train 10. It is also possible to use a wired network within the train 10. For instance, the router 100 is provided in one carriage and an ethernet cable is routed from the router 100 to the other carriages wherein the ethernet cable is connected to one or more wireless access points and/or directly to the client(s) 160. Thus, the LAN 150 may be set-up as wireless access point(s), e.g. using an IEEE 802.11 standard (WiFi). The client(s) 160 may be computing devices such as laptops, mobile telephones, smartphones, tablets, PDAs and so on.

The router 100 comprises a plurality of modems 101 a-d. Assignment of data streams to different communication links is controlled by a controller 103. The controller 103 is preferably realized as a software controlled processor. However, the controller 103 may alternatively be realized wholly or partly in hardware.

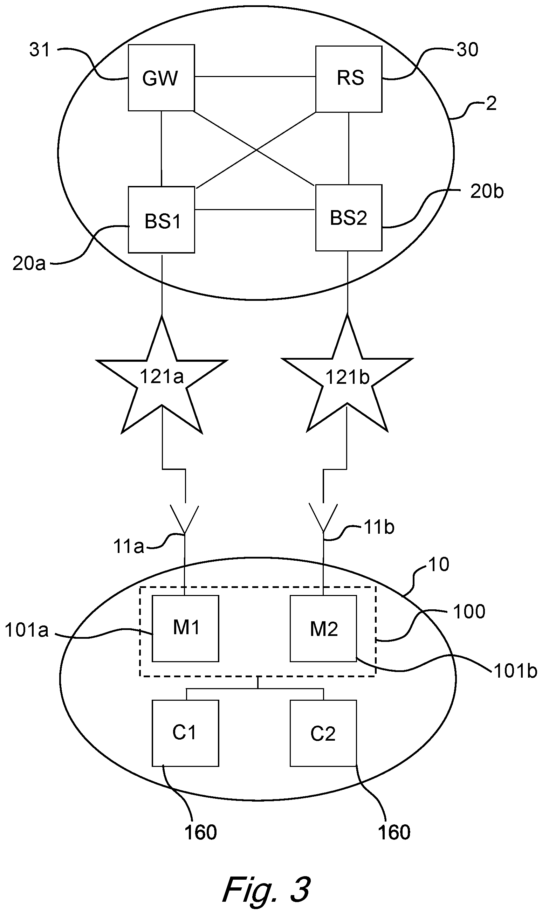

In Fig. 3 is detailed block diagram of the communication system is illustrated, comprising a train 10 with a router 100 with two modems 101a, 101b referred to as M1, M2 which define two communication links 121a, 121b using a respective front and aft antenna 11a, 11b. The communication links 121a, 121b are defined as to/from each of two nearby base stations 20a, 20b referred to as BS1, BS2 as well as several servers connected to the external network 2 such as the aggregation gateway/aggregation server 31 referred to as GW and a target site/remote server 30 referred to as RS for on-board client devices 160 referred to as C1 and C2. For simplicity, fig. 3 shows the simplest embodiment that may be used to illustrate the invention. However, it should be appreciated by the skilled addressee that many more communication links, stationary servers, aggregation servers, antennas, etc. may be used in analogy with this simplified embodiment.

With reference fig. 3 a variety of scenarios differing only in the reachability of the aggregation server 31 will now be considered

In scenario I, the aggregation server 31 is reachable and idle, such as being under 0-20% load. In this scenario, it is economically efficient for the router 100 to construct a virtual connection to the aggregation server 31, by aggregating data over the front and aft communication links 121a, 121b and assign all traffic from one client device, C1, and a second client device, C2, to the virtual connection. This creates a load on the aggregation server 31, including a load on overall site bandwidth as well as server CPU etc.

In scenario II, the aggregation server 31 is reachable but under some load, such as being under 20-70% load, or 30-60% load, such as under 40% load, from other routers. The virtual connection can still be created and will be stable.

In scenario III, the aggregation server 31 is reachable but under heavy load, such as under 60-99% load, or 80-99% load, such as 95% load. The virtual connection may be intermittent as a result of CPU bottlenecks or network congestion at the aggregation server site.

In scenario IV, the aggregation server 31is not responding, e.g. due to overload (100% load), or being subject to power breakdown, having been hacked by a hostile agent, or for other reasons being permanently or temporarily unreachable. Here, there will be no virtual connection.

In the event that the router 100 observes its aggregation server to be entirely unreachable, or equivalently in the event that the aggregation server 31 is too busy to provide adequate performance, the router 100 may fall back to another aggregation server 100. In an embodiment, the router 100 may, after having failed in its search for a functioning aggregation server 31, cease to aggregate traffic entirely until an adequate aggregation server 31 connection has been established. This will cause the router 100 to provide inferior performance, but it does enable the continued use of multiple concurrent links.

In one possible embodiment of the present invention, the router 100 is configured to aggregate all client traffic except TCP traffic with a destination port of 80. The router 100 has a firewall rule carrying out the analysis of client traffic to identify all such packets. This is an attractive solution because the firewall rule produces very little overhead. Round-robin routing of the unaggregated traffic, where the front and aft communication links 121a, 121b take turns handling each new data stream, is also cheap in terms of CPU cycles. In the example of a Linux-based router, round robin can be achieved using a "nexthop" function in the operating system kernel. However, not all TCP traffic on port 80 is actually HTTP traffic, and some HTTP traffic, such as large file downloads, stands to benefit from aggregation, so the simplicity of this embodiment does come with some drawbacks. Round-robin routing may also, in some situations, lead to poor performance if the streams assigned to a first one of the front and aft communication links 121a, 121b turns out to be much larger than those assigned to a second one of the front and aft communication link 121a, 121b. There would be underutilized bandwidth on the second communication link. The aggregated traffic could be placed more intelligently to compensate, as is per se known. In any case, this simplistic embodiment alleviates the load on the aggregation server 31 in scenarios I and II, without degrading performance too badly.

In a more preferable embodiment, the router 100 runs packet inspection software or talks to an external packet sniffer to analyze client traffic on a deeper level, purely for the purpose of aggregation triage. Packet inspection would make it possible to identify a variety of traffic types in need of aggregation or other special treatment such as the aforementioned VPN tunnels or voice-over-IP (VOIP) connections. VOIP, conveying the human voice in real time, is sensitive to latency and should therefore be routed with special consideration for latency, such as can more easily be obtained with aggregation than without it. With such an embodiment, it would be possible to aggregate only those types of traffic in particular need of aggregation, and route everything else away from the aggregation server 31 by default. This would greatly alleviate the load on the aggregation server 31, ideally to the point of allowing the virtual connection to remain useful for special needs in scenario III.

A variety of routing schemes for unaggregated traffic can be used in an embodiment. The various link characteristics measurable by the router can be taken into account in such routing schemes. For example, in scenario IV, VOIP cannot be aggregated, but it would still be possible to analyze the available links so that VOIP traffic is routed, unaggregated, over whichever link has the lower (i.e. better) latency value. In general, the traffic most in need of aggregation would have preferential treatment in scenario IV, being assigned to links with better characteristics, while other traffic is assigned to inferior links.

In a preferred embodiment, the router 100 adjusts which types of traffic are aggregated depending on the circumstances. In scenario I, for example, the router would aggregate everything, while in scenario II it would cease to aggregate the downloading of ordinary web pages and images, as detected by relatively simple HTTP header inspection. In scenario III the router 100 would aggregate only the most needful data streams using deep packet inspection, and finally, in scenario IV, the router 100 would aggregate nothing, instead routing all traffic, including DNS lookups, directly onto the links until a gateway/aggregation server 31 connection can be reestablished. This embodiment would make the router 100 highly responsive and resilient, but less predictable than the alternative embodiments discussed above.

In the exemplary embodiment in fig. 3 only two communication links, the front and aft communication link 121a, 121b, are depicted, however, it is understood that these two communication links may be accompanied by one or more additional communication links, such as one or more of the second front communication link, the second aft communication link and the auxiliary communication link.

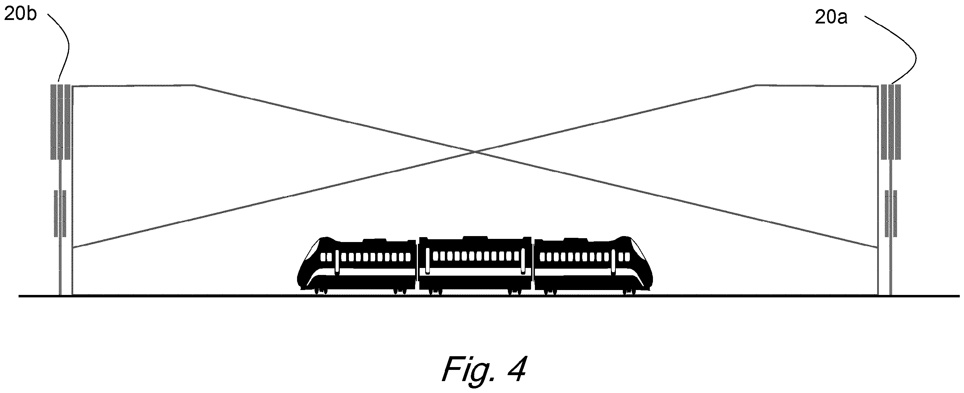

In the exemplary embodiment of Fig. 4, the system is similar to the one discussed in relation to Fig. 1. At least one of the front antenna and aft antenna is preferably a directional antenna. In a preferred embodiment, all front and aft antennas are directional antennas. Thus the front and aft communication link may be established without overhearing even if the front and aft antenna are placed closely together, e.g. on the same train carriage. Using the directionality of the directional antennas the front and aft antenna may be directed towards the first and second base station respectively which minimizes and/or eliminates overhearing. The communication system may further comprise an antenna steering unit configured to steer an antenna beam of said at least one directional antenna. For instance, the at least one directional antenna is at least one of an electronically steered phased array antenna (such as an electronically steered patch array antenna) and a mechanically steered antenna (such as a steerable parabolic dish antenna) wherein the antenna steering unit is configured to electronically or mechanically steer said antenna beam. Accordingly, the antenna steering unit may steer the antenna beam of the front and/or aft antenna so as to target the first and second base station even when the train is moving.

The antennas on the base stations 20a, 20b may also be directional antennas, and in particular when trackside/wayside base stations are used. In a preferred embodiment, as illustrated in Fig. 4, the antennas of the base stations are directed in a direction generally coinciding with the railway, and also to some extent directed downwardly. Preferably, the downward direction is such that the antenna beams reach the ground at a position ahead of the next base station, or at least below the receivers of the next base station. Hereby, radio contact between the base stations may be avoided, which facilitates reuse of the radio channels/links between the base stations. Hereby, use of the same links/channels both at the front antenna(s) and the aft antenna(s) is further facilitated.

The base stations may be part of a private network, arranged as wayside/trackside base stations. The base stations may e.g. be arranged 2-5 km apart in open air, and closer in tunnels and subway systems.

For trackside base stations, and with the above-discussed directional antennas, the communication preferably occurs as line-of-sight (LOS) communication. This is different from communication through conventional cellular communication systems. The LOS communication limits the interference with other networks and makes it possible to provide a very high capacity coverage along the track with a low-power, cost-efficient solution.

However, as an alternative, or in addition, such as for back-up or for parts not provided with trackside base stations, it is also possible to use conventional cellular networks, with base stations arranged at some distance from the railway.

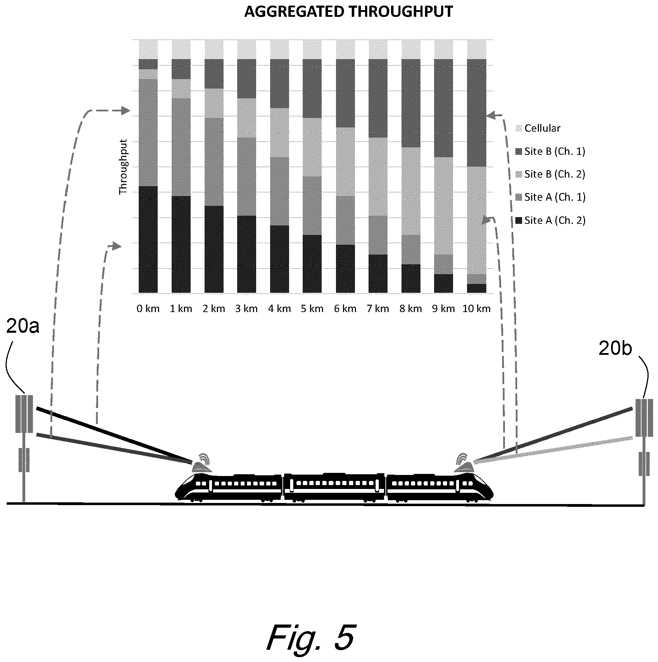

Preferably, the same channel(s)/link(s) are used for both the aft and front antenna(s). Hereby, the effectively used number of links/channels is doubled compared to the actual number of available channels/links. This is further illustrated in Fig. 5, showing the aggregated throughput obtained in a system as shown in Fig. 4, at various positions between two adjacent base stations 20a, 20b. In this embodiment, two channels - Channel 1 and Channel 2 - are used in the forward direction of the train, for communication between the antennas at the fore end of the train and base station 20a located ahead of the train, and the same two channels - Channel 1 and Channel 2 - are used in the backward direction of the train, for communication between the antennas at the aft end and the base station 20b, located behind the train.

In this illustrative example, the two base stations 20a and 20b are arranged 10 km apart, and a train is travelling between the two base stations. As can be derived from the diagram, at a position very close to base station 20a, Site A, much throughput is provided through base station 20a over both Channel 1 and Channel 2, whereas the throughput provided through base station 20b, at Site B, is very limited. In addition, a small contribution to the throughput may be provided through cellular network(s). This is illustrated at diagram position "0 km". As the train travels away from Site A and base station 20a and towards Site B and base station 20b, the throughput over Channels 1 and 2 over base station 20a gradually decreases, and the throughput over Channels 1 and 2 over base station 20b gradually increases, as shown at positions 1-9 km. At the final position, "10 km" the train is very close to the base station 20b, and most of the throughput is provided through Channels 1 and 2 over the base station 20b, and only a limited part over base station 20a.

The throughput provided by the channels/links provided the fore and aft end will be dependent on the distance to the base stations ahead of and behind the train, and generally the highest overall throughput will be obtained when the train is essentially between the two base stations. As the train passes a base station, it may temporarily loose contact with that base station, and a handover for the front end communication will be made to the next base station ahead of the train. Having passed the base station completely, a new handover will be made for the aft end communication, handing over from the base station behind to the one that has just been passed. However, as the handovers will not be made at the same time, the train will be continuously connected.

The channels may e.g. have a bandwidth of 80 MHz, and for example, four channels in the 5 GHz band may be used simultaneously, as in the above-discussed exemplary embodiment. Each single 80 MHz link can provide a throughput of up to 600 Mbps, thereby providing a very high aggregated throughput.

However, more than two channels in each direction may also be used, such as 3 or 4 channels in each direction.

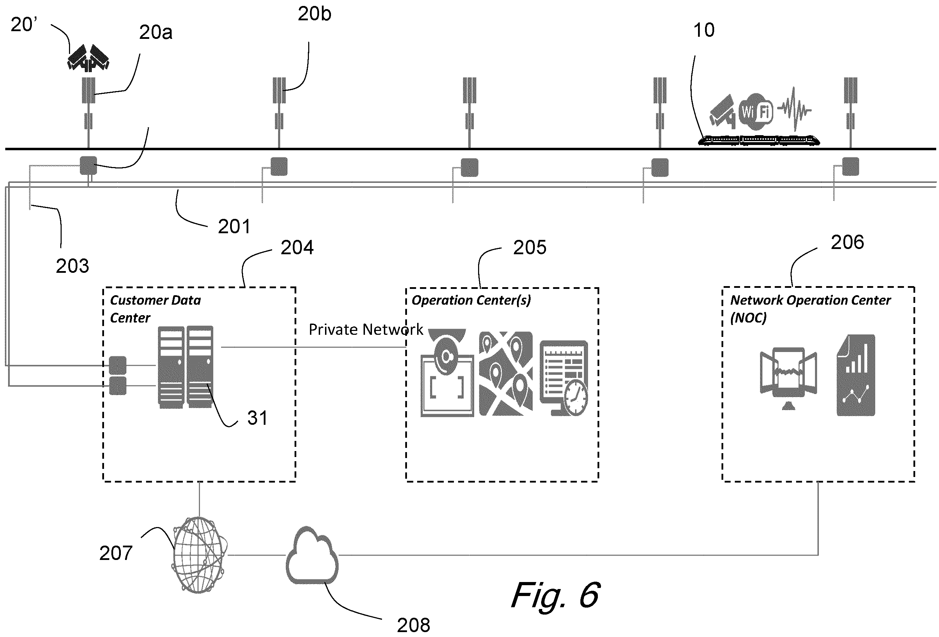

Fig. 6 is a more detailed view of a wireless communication system similar to the one discussed in relation to Fig. 1. A train 10 travels on a railway, and trackside/wayside base stations 20a, 20b, ..., are arranged along the railway. Some or all of the base stations may further be provided with optical and/or IR cameras 20' or other surveillance equipment, useable e.g. for corridor surveillance along the railway tracks. Each base station may, as in the previously discussed embodiment, be provided with e.g. four antennas, two of which may be directed in one direction along the railway tracks, and two of which may be directed in the opposite direction along the railway tracks. The antennas may be Wi-Fi antennas, to communicate over a 802.11 protocol.

The base stations may further be provided with a controller connected to the antennas.

The base stations are connected to an external network. For example, the base stations may be connected to a fiber cable 201, running along the railway track. More than one fiber cable 201 may also be provided, for redundancy and/or increased capacity. The equipment of the base stations may be directly powered. However, preferably the power is provided through a power-over-Ethernet (PoE) switch, providing power to the equipment of the base station and at the same time communicating data to and from the base station. One PoE switch may be provided for each base station, and the PoE switches may be connected to a power cable, 203, such a conventional power distribution network.

The fiber cable connects the base stations to a Customer Data Center 204, which houses the aggregation gateway/server 31. The Customer Data Center may also include other parts.

As part of the private network, one or more Operation Center(s) 205 may be connected to the Customer Data Center, and may be operatively responsible for example for certain traffic, such as CCTV data and operational data. Hereby, such data can be maintained secure and safe.

The Customer Data Center 204 may further be connected to other servers, and to the Internet 207, through the aggregation server 31. Thus, the aggregation server 31 may forward data to other servers, and may also receive data from such other servers. The Customer Data Center may also be connected to various cloud services, such as IcoCloud. Data stored in the could service(s) can e.g. be accessed and used by a Network Operation Center (NOC) 206, which may e.g. monitor and report performance parameters of the trackside network.

Through the wireless communication system, a plethora of various onboard services may be provided at or in the train, such as passenger Wi-Fi, staff Wi-Fi, onboard live streamed surveillance video, telematics, etc.

The communication system on the train is illustrated in more detail in Fig. 7. As can be seen, antennas 11a, 12a are arranged at one end of the train set, and antennas 11b, 12b are arranged at an opposite end of the train set. The antennas are each connected to a router 100. In the illustrative example, one router is provided at each end of the train. The communication between the router and the antennas may further pass through an additional controller, a trackside unit 151, such as a radio unit. A switch 152 may be arranged between the router 100 and the radio unit 151. The routers 100 are connected together through a digital train line, or train backbone 150", which also connects the routers to access points 150'. One or more PoE switches may also be provided, e.g. between the routers and the trackside units.

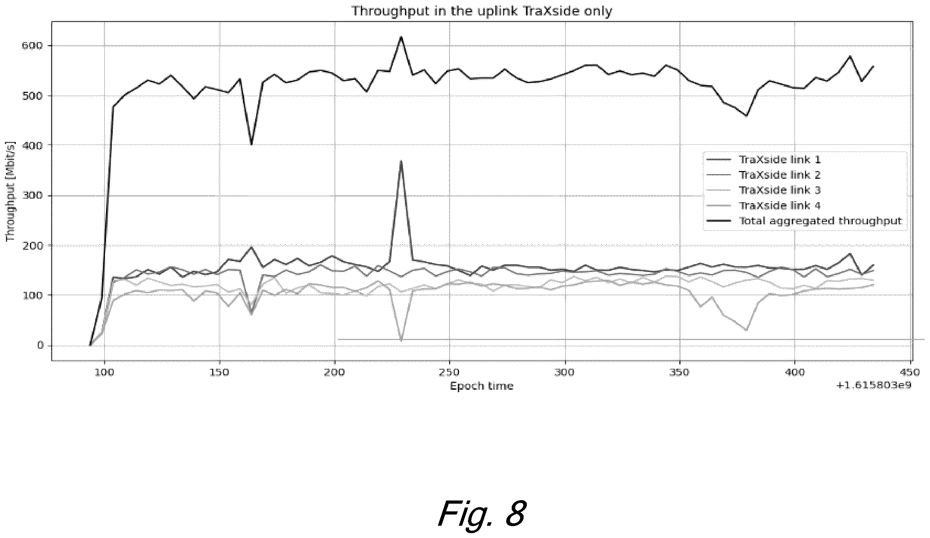

Practical measurements have shown that a wireless communication system as discussed in the foregoing can provide very high throughput over long distances, and with very high stability and robustness. The diagram of Fig. 8 illustrates the measured throughput for a train travelling between 7 consecutive sites, i.e. base stations, each of the base stations providing two channels in a first direction and two channels in an opposite, second direction. Each channel has a bandwidth of 80 MHz. Each base station was provided with 8 antennas in total, with 4 in each direction, and 2 antennas being provided for each channel. The two channels were provided as 30 dBm EIRP on UNII-2, and 36 dBm EIRP on UNII-3.

The measurements show that a very stable aggregated throughput was obtained over the test installation, with an average throughput of 500 Mbit/s. As a comparison, the throughput obtainable with conventional LTE only was 48 Mbit/s, which means that the new system provided an average throughput about 10 times higher. The throughput over the different channels, also illustrated separately in Fig. 8, varied significantly over the test installation, whereas the aggregated throughput was very stable and consistent.

The invention has now been described with reference to specific embodiments. However, several variations of the communication system are feasible. For example, any number of parallel links may be used, both for the aggregated communication and the non-aggregated communication. Further, the communication system may be used on various types of vehicles. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A wireless communication system for use aboard a moving vehicle (10), the wireless communication system comprising:
at least one router (100) in the moving vehicle (10) for communication with at least one stationary remote server (30) through at least one external network (2) comprising a plurality of base stations (20a, 20b),
at least one front antenna (11a) connected to the router (100), the at least one front antenna (11a) being provided on a front portion of the moving vehicle (10),
at least one aft antenna (11b) connected to the router (100), the at least one aft antenna (11b) being provided on an aft portion of the moving vehicle (10),
wherein the router (100) is arranged to establish a connection with the remote server (30) over a front communication link (121a) via the at least one front antenna (11a) and a first base station (20a) of said external network (2),
wherein the router (100) is arranged to establish a connection with the remote server (30) over an aft communication link (121b) via the at least one aft antenna (11b) and a second base station (20b) of said external network (2),
wherein the at least one remote server (30) at least comprises an aggregation server (31),
wherein the router (100) is configured for receiving and transmitting wireless data to and from said aggregation server (31), using aggregated communication over a plurality of separate communication links, the communication thereby at the end points appearing as a single link, and
wherein said plurality of communication links comprises the front and aft communication link (121a, 121b).

2. The wireless communication system according to claim 1, wherein the frequency band of a front and aft communication link (121a, 121b) are overlapping.

3. The wireless communication system according to claim any of the preceding claims, wherein the frequency band of the front and aft communication link (121a, 121b) are in an Unlicensed National Information Infrastructure, UNII, frequency band, preferably in the UNII-1 and/or UNII-3 frequency bands.

4. The wireless communication system according to any of the preceding claims, wherein the moving vehicle (10) is a moving train with at least three carriages (15, 16, 17, 18), and wherein the front antenna and aft antenna (11a, 1 1b) are provided on a front and aft carriage respectively, the front and aft carriage being separated by at least one carriage.

5. The wireless communication system according to any of the preceding claims, wherein said front and aft communication links (121a, 121b) are of a first frequency band, said system further comprising:
a second front and aft antenna (12a, 12b) configured to communicate with the first and second base station (20a, 20b) respectively over a second frequency band, forming a second front and aft communication link (122a, 122b), the second frequency band being different from the first frequency band and the plurality of communication links further comprising the second front and aft communication links (122a, 122b).

6. The wireless communication system according to any of the preceding claims, wherein at least one of the front antenna and aft antenna (11a, 11b) is a directional antenna.

7. The wireless communication system according to claim 6, further comprising an antenna steering unit configured to steer an antenna beam of said at least one directional antenna.

8. The wireless communication system according to claim 7, wherein the at least one directional antenna is at least one of an electronically steered phased array antenna and a mechanically steered antenna, and wherein the antenna steering unit is configured to electronically or mechanically steer said antenna beam.

9. The wireless communication system of any of the preceding claims, wherein the router (100) is configured for receiving and transmitting wireless data to and from both said aggregation server (31), using aggregated communication over said front and aft communication links (121a, 121b), and at least one other stationary communication server (30), using non-aggregated communication over a single link, and the router (100) further being accessible by a plurality of client devices (160) onboard said moving vehicle (10).

10. The wireless communication system of claim 9, further comprising a controller (103) within or connected to said router (10), said controller (103) including at least one selection rule for selecting whether to use aggregated or non-aggregated communication, the controller (103) being configured to determine, upon a request from a client device (160) to communicate with one of said remote servers (30), whether one of said at least one rules applies, and to select using aggregated communication via said aggregation server (31) or non-aggregated communication via said at least one other communication server (30) for communication based on said determination.

11. The wireless communication system of any one of the preceding claims, wherein the router (100) is arranged to automatically separate the communication traffic between the front and aft communication links (121a, 121b) based on specific optimization conditions, such as price, latency and/or speed.

12. The wireless communication system of any one of the preceding claims, wherein the router (100) is further connected to an internal network (150) on-board the moving vehicle, for connection to on-board client devices (160), and preferably a wireless internal network, and most preferably a wireless internal network operated in accordance with an IEEE 802.11 standard.

13. The wireless communication system of any of the preceding claims, further comprising
an auxiliary antenna (13) provided on the moving vehicle, the auxiliary antenna (13) being connected to the router (100), wherein the router (100) is further arranged to establish a connection with the remote server (30) over an auxiliary communication link via the auxiliary antenna (13) and said external network (2), and wherein said plurality of communication links further comprises the auxiliary communication link.

14. A method for wireless communication between a moving vehicle (10), comprising a front and aft antenna (11a, 11b) provided on a front and aft portion of the moving vehicle (10) respectively, and at least one stationary remote server (30) through at least one external network (2) comprising a plurality of base stations (20a, 20b), the method comprising:
providing a front communication link (121a, 121b) between a router (100) of the moving vehicle (10) and the remote server (30) via the front antenna (11a) and a first base station (20a) of the external network (2);
providing an aft communication link (121b) between the router (100) and the remote server (30) via the aft antenna (11b) and a second base station (20b) of the external network (2);
communicating between said router (100) and said at least one remote server (30) via an aggregation server (31); and
wherein the router (100) is configured for receiving and transmitting wireless data to and from said aggregation server (31), using aggregated communication over at least said front and aft communication links (121a, 121b), the communication thereby at the end points appearing as a single link.
